# EUROPEAN PATENT SPECIFICATION

(11) **EP 2 309 569 B1**
(45) Date of publication and mention of the grant of the patent: **13.02.2013**
(21) Application number: 10181694.0
(22) Date of filing: 29.09.2010
(51) Int. Cl.: H01M 2/02, H01M 2/10, H01M 2/14, H01M 2/16, H01M 2/18

(54) **Rechargeable battery**
Wiederaufladbare Batterie
Batterie rechargeable

(30) Priority: 07.10.2009 US 272579 P; 13.09.2010 US 923275
(43) Date of publication of application: 13.04.2011
(73) Proprietor: SB LiMotive Co., Ltd., Yongin-si Gyeonggi-do (KR)
(72) Inventor: Kim, Hyo-Seob, Gyeonggi-do (KR); Kim, Yong-Sam, Gyeonggi-do (KR)
(74) Representative: Gulde Hengelhaupt Ziebig & Schneider

(56) References cited:
- EP-A1- 1 202 371
- EP-A1- 2 228 852
- EP-A2- 1 043 782
- US-A1- 2004 191 612
- US-A1- 2006 024 578
- US-A1- 2006 214 632
- US-A1- 2008 160 399

## Description

### Field of the Invention

The present invention relates to a rechargeable battery, and more particularly, to a rechargeable battery with a structure of absorbing or damping impact and vibrations with respect to an electrode assembly.

### Description of the Related Art

A rechargeable battery differs from a primary battery in that it can be repeatedly charged and discharged, while the latter makes only the irreversible conversion of chemical to electrical energy. The low-capacity rechargeable battery is used as the power supply for small electronic devices, such as cellular phones, notebook computers and camcorders, while the high-capacity rechargeable battery is used as the power supply for driving motors in hybrid vehicles and the like.

A high-power rechargeable battery using a non-aqueous electrolyte with a high energy density has been recently developed. For example, the high-power rechargeable battery is constructed with a high-capacity rechargeable battery having a plurality of rechargeable cells coupled to each other in series such that it can be used as the power supply for driving motors in electric vehicles requiring high power.

Furthermore, one high-capacity rechargeable battery is commonly formed with a plurality of rechargeable cells coupled to each other in series. The rechargeable battery may have a cylindrical shape, a prismatic shape, a pouch shape, etc.

The rechargeable battery usually includes an electrode assembly with positive and negative electrodes and a separator interposed between the two electrodes, a case mounting the electrode assembly therein, and positive and negative terminals electrically connected to the electrode assembly and protruded to the outside of the case.

As the electrode assembly is mounted within the case and electrically connected to the terminals, the electrode assembly is liable to be shaken due to the external impact or vibration, and deteriorated in the electrical connection thereof to the terminals. EP 1 202 371 A1 discloses a laminate sheath type battery with a protective frame providing protection again vibration or impact. The frame is placed along the small vertical side faces of the electrode assembly and the case.

When the contact resistance between the electrode assembly and the terminals increases, the output of the rechargeable battery is deteriorated and the resistance heat is much generated so that the temperature of the rechargeable battery may be elevated. In case the temperature of the rechargeable battery is heightened, the performance characteristics of the rechargeable battery may be deteriorated, or the rechargeable battery may be fired or exploded due to the continual elevation in temperature.

Furthermore, in case the electrode assembly is broken or torn due to the external impact, an inner short may be made. When the inner short is made, the internal temperature of the rechargeable battery may be radically heightened.

The above information disclosed in this Background section is only for enhancement of understanding of the background of the invention and therefore it may contain information that does not form the prior art that is already known in this country to a person of ordinary skill in the art.

### SUMMARY OF THE INVENTION

The present invention has been made in an effort to provide a rechargeable battery having advantages of improving the impact absorbing and the vibration damping.

Accordingly, a rechargeable battery is provided, comprising an electrode assembly having a first electrode and second electrode, and a separator interposed between the first and second electrode, and a case for mounting the electrode assembly therein. Further provided is a buffer sheet between the electrode assembly and the case spacing apart the electrode assembly from the case and contacting the electrode assembly and the case. The buffer sheet comprises a bottom support plate and first and second side support plates and at least one of elastically deformable bottom springs extending from lateral side surfaces of the bottom support plate, and elastically deformable side springs extending from lateral side surfaces of the side support plates.

Advantageously, a buffer sheet buffers an electrode assembly between the electrode assembly and the case so that the electrode assembly can be prevented from suffering severe impacts.

The buffer sheet is preferably elastically deformable. It may additionally comprise plate-shaped portions. It may be u-shaped or may have the shape of a hexahedron with a top opening. It may comprise a polymer material. Or it may comprise a polymer film coated on a metal surface.

The buffer sheet is preferably installed between the electrode assembly and the bottom and side surfaces of the case.

The length of the buffer sheet is preferably equal or larger than the inner length of the battery. The width of the buffer sheet is preferably equal or larger than the inner width of the battery.

The side support plates preferably extend from lateral ends of the bottom support plate.

The sum in width of the bottom support plate and the bottom springs is preferably larger than or the same as the inner width of the case. Additionally or alternatively, the sum in width of the side support plates and the side springs is larger than or the same as the inner width of the case.

The at least one of the bottom springs and the side springs may not be provided in the regions where the bottom support plate connects the side support plates.

The bottom springs and/or side springs are may be plate springs.

The bottom support plate may face the inner bottom surface of the case and may be provided spaced apart from the bottom surface of the case. Additionally or alternatively, the first and second side support plates may face the respective inner side surfaces of the case and may be provided spaced apart from the respective inner side surfaces of the case. The at least one of the bottom springs and side springs may contact the inner surface of the case.

The bottom springs and/or the side springs are preferably bent away from the electrode assembly.

On at least a first lateral side of the bottom support plate an insulating film may be attached between the bottom spring and the first and second side springs.

Further, a support plate hole may be provided within the side support plate.

The case comprises rounded or curved edges formed at the connection between the bottom of the case and side surfaces of the case, and/or the connection between the bottom of the case and front and back surfaces of the case, and/or the connection between side surfaces of the case and front and back surfaces of the case.

### BRIEF DESCRIPTION OF THE DRAWINGS

FIG. 1 is a perspective view of a rechargeable battery according to a first exemplary embodiment of the present invention.
FIG. 2 is a cross-sectional view of the rechargeable battery taken along the II-II line of FIG. 1.
FIG. 3 is a perspective view of a buffer sheet for a rechargeable battery according to a first exemplary embodiment of the present invention.
FIG. 4 is a vertical partial cut-away perspective view of a rechargeable battery according to a first exemplary embodiment of the present invention.
FIG. 5 is a horizontal partial cut-away perspective view of a rechargeable battery according to a first exemplary embodiment of the present invention.
FIG. 6 is a vertical sectional view of a rechargeable battery according to a second exemplary embodiment of the present invention.
FIG. 7 is a horizontal sectional view of a rechargeable battery according to a second exemplary embodiment of the present invention.
FIG. 8 is a perspective view of a buffer sheet of a rechargeable battery according to a third exemplary embodiment of the present invention.
FIG. 9 is a horizontal cut-away perspective view of a rechargeable battery according to a third exemplary embodiment of the present invention.

### DETAILED DESCRIPTION OF THE EMBODIMENTS

The present invention will be described more fully hereinafter with reference to the accompanying drawings, in which exemplary embodiments of the present invention are shown. As those skilled in the art would realize, the described embodiments may be modified in various different ways, all without departing from the scope of the present invention. Like reference numerals designate like elements throughout the specification and drawings.

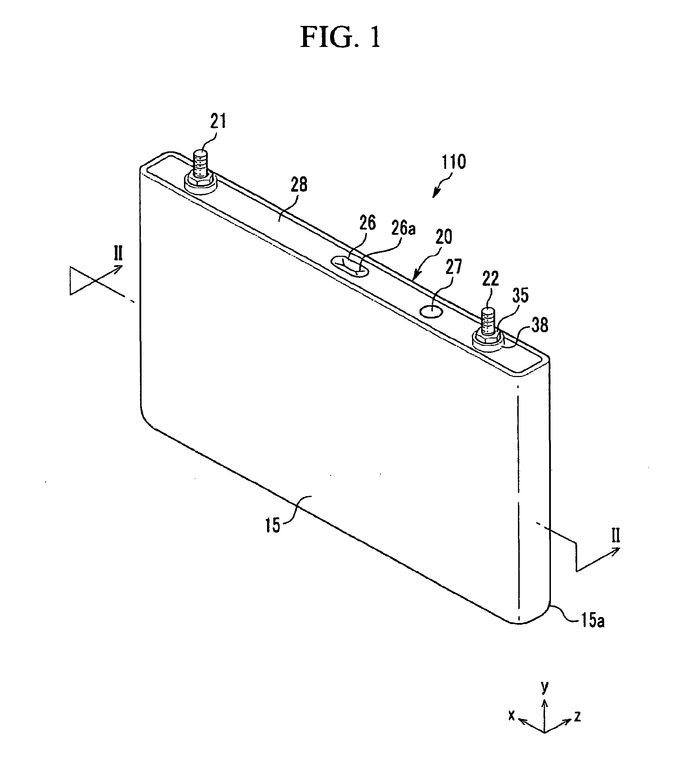

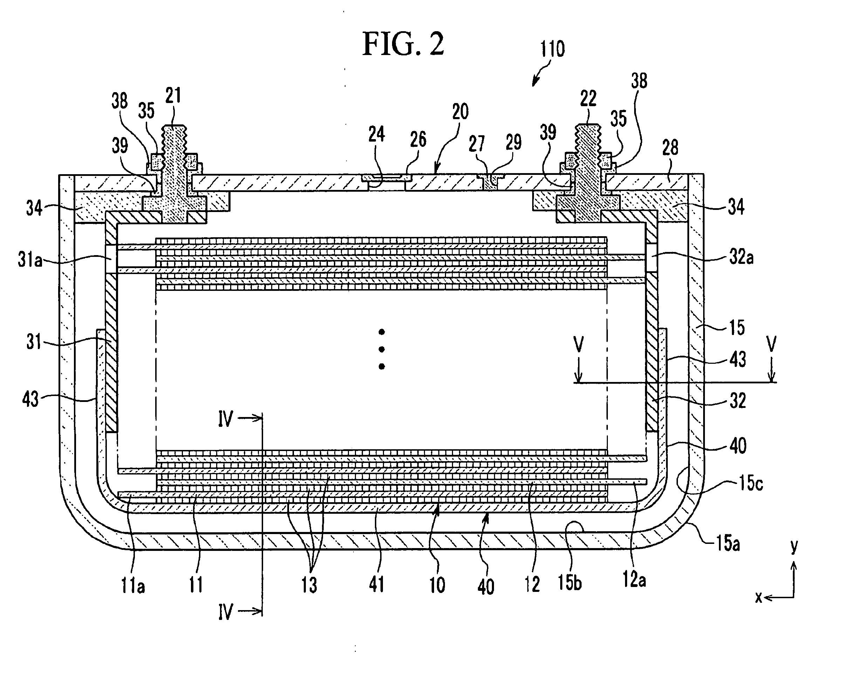

FIG. 1 is a perspective view of a rechargeable battery according to a first exemplary embodiment of the present invention, and FIG. 2 is a cross-sectional view of the rechargeable battery taken along the II-II line of FIG. 1.

Referring to FIG. 1 and FIG. 2, the rechargeable battery 110 includes an electrode assembly 10 performing charging and discharging operations, a case 15 mounting the electrode assembly 10 therein, and a cap assembly 20 sealing the case 15.

A lithium ion battery is exemplified as the rechargeable battery 110 according to the first exemplary embodiment. However, the present invention is not limited thereto, and may be applied to various types of batteries including a lithium polymer battery.

The electrode assembly 10 is structured such that positive and negative electrodes 11 and 12 are wound by interposing a separator 13 therebetween. The positive electrode 11, the negative electrode 12 and the separator 13 are band-shaped, and elongated in a direction. However, the present invention is not limited thereto, and the electrode assembly 10 may be structured such that a plurality of positive and negative electrodes 11 and 12 are alternately deposited while interposing a separator 13 therebetween.

The positive electrode 11 includes a positive current collector, and a positive active material-based layer formed on the positive current collector. A positive uncoated region 11a with no positive active material is formed along a one-sided lateral end of the positive electrode 11 in the longitudinal direction thereof.

The negative electrode 12 includes a negative current collector, and a negative active material-based layer formed on the negative current collector. A negative uncoated region 12a with no negative active material is formed along a one-sided lateral end of the negative electrode 12 in the longitudinal direction thereof.

The case 15 makes formation of the whole exterior of the rechargeable battery 110, and provides a space for mounting the electrode assembly therein. For example, the case 15 is formed with a cuboid shape having a one-sided opening for receiving the cuboidal electrode assembly 10. A rounded portion 15a bent in the shape of an arc is formed at each edge of the case 15. The rounded portion 15a is formed in the shape of an arc with a radius of 2mm or more.

However, the present invention is not limited thereto, and the case 15 may be formed with various shapes including a cylindrical shape and a pouch shape. Furthermore, the case 15 may be formed with a metal such as aluminum, aluminum alloy and nickel-plated steel, or a pouched laminate film.

The cap assembly 20 includes a cap plate 28 fitted to an opening of the case 15, a positive terminal 21 electrically connected to the positive electrode 11 and protruded to the outside of the case 15, and a negative terminal 22 electrically connected to the negative electrode 12 and protruded to the outside of the case 15.

The cap plate 28 is plate-shaped, and fitted to an opening of the case 15. A sealing cork 27 is provided at an electrolyte injection hole 29 of the cap plate 28. Furthermore, a vent plate 26 is provided at the cap plate 28 with a notch 26a, which is formed at a vent hole 24 and capable of opening under a predetermined pressure.

The positive and the negative terminals 21 and 22 are electrically connected to the electrode assembly 10, and protruded to the outside of the case 15.

The positive and the negative terminals 21 and 22 pass through the cap plate 28, and flanges are formed under the positive and the negative terminals 21 and 22 while supported at the bottom of the cap plate 28, while the outer circumference of the upper pillar protruded to the outside of the cap plate 28 is screw-processed. Furthermore, nuts 35 are coupled to the terminals 21 and 22 while supporting them from the top side.

Upper and lower gaskets 38 and 39 are installed between the positive and the negative terminals 21 and 22 and the cap plate 28 so as to seal and insulate the terminals 21 and 22 and the cap plate 28 from each other.

The positive terminal 21 is electrically connected to the positive electrode 11 via a first lead tab 31, and the negative terminal 22 is electrically connected to the negative electrode 12 via a second lead tab 32. The first and the second lead tabs are disposed at the lateral ends of the electrode assembly, and tab holes 31 a and 32a are formed at the lead tabs 31 and 32 so as to discharge gas therethrough.

Meanwhile, a lower insulating member 34 is disposed under the cap plate 28, and the bottom ends of the terminals 21 and 22 and the top ends of the lead tabs 31 and 32 are inserted into the lower insulating member 34.

With this structure, the first lead tab 31 electrically interconnects the positive terminal 21 and the positive electrode 11, and the second lead tab 32 electrically interconnects the negative terminal 22 and the negative electrode 12.

A buffer sheet 40 is installed between the electrode assembly 10 and the bottom and the lateral surfaces 15b and 15c of the case 15 so as to press or support the electrode assembly 10 against the case 15.

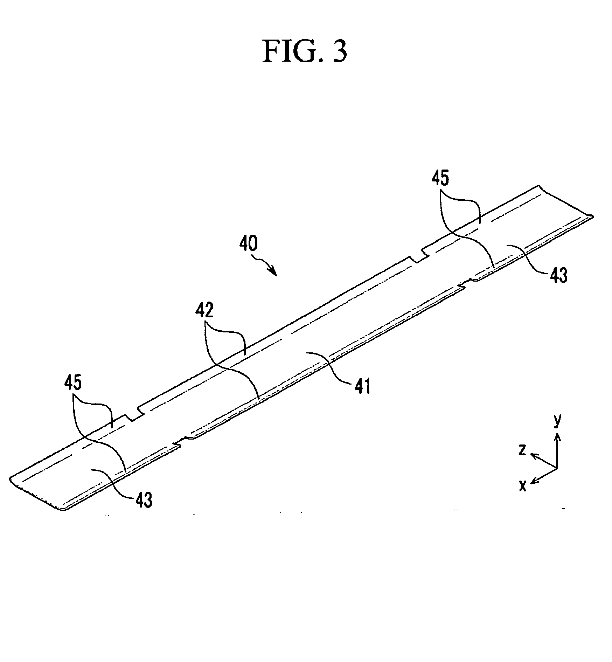

FIG. 3 is a perspective view of a buffer sheet of a rechargeable battery according to a first exemplary embodiment of the present invention.

The buffer sheet 40 will be described in detail with reference to FIG. 3. The buffer sheet 40 includes two support plates 41 and 43, and resilient members or springs 42 and 45 installed between the support plates 41 and 43 and the case 15 while being elastically deformed.

The buffer sheet 40 includes a bottom support plate 41 facing the bottom surface 15b of the case 15, and side support plates 43 facing the lateral surfaces 15c of the case 15. Furthermore, the buffer sheet 40 includes bottom springs 42 pressing the bottom support plate 41 against the case 15, and side springs 45 pressing the side support plate 43 against the case 15. The buffer sheet 40 may be formed with polymer such as polypropylene and polyethylene, or a laminate film where a polymer film is coated on both surfaces of a metal.

The buffer sheet 40 is originally plate-shaped while elongated in a direction such that the side support plates 43 are connected to both ends of the bottom plate 41. When the buffer sheet 40 is mounted within the case 15, the side support plates 43 are bent perpendicular to the bottom support plate 41, and accordingly, the buffer sheet 40 is roughly formed in the shape of a rectangle "U" with a top-sided opening. This form may also be described as a brace, bracket or cramp. The bottom and the side springs 42 and 45 are not formed at the regions where the bottom support plate 41 and the side support plates 43 are connected to each other. Accordingly, the side support plates 43 may be easily bent with respect to the bottom support plate 41. In other words, lateral sides of the buffer sheet 40 exhibit a cut-out in the region where the bottom support plate 41 merges into the side support plates 43.

The bottom springs 42 are formed at both lateral sides of the bottom support plate 41, and are elastically deformed while contacting the inner surface of the case 15. The bottom springs 42 are plate-shaped while elongated along both lateral sides of the bottom support plate 41, and contact the inner surface of the case 15 facing the bottom springs 42 so as to space the bottom support plate 41 from the inner surface of the case 15 with a distance. The bottom springs 42 are formed in the shape of a plate spring, and elastically deformed depending upon the pressurizing power thereto.

The side springs 45 are formed at both lateral ends of the side support plates 43 such that they are elastically deformed while contacting the inner surface of the case 15.

The side springs 45 are plate-shaped while elongated along the lateral sides of the side support plates 43, and contact the inner surface of the case 15 so as to space the side support plates 43 from the case 15 with a distance. The side springs 45 are formed in the shape of a plate spring, and elastically deformed depending upon the pressurizing power thereto.

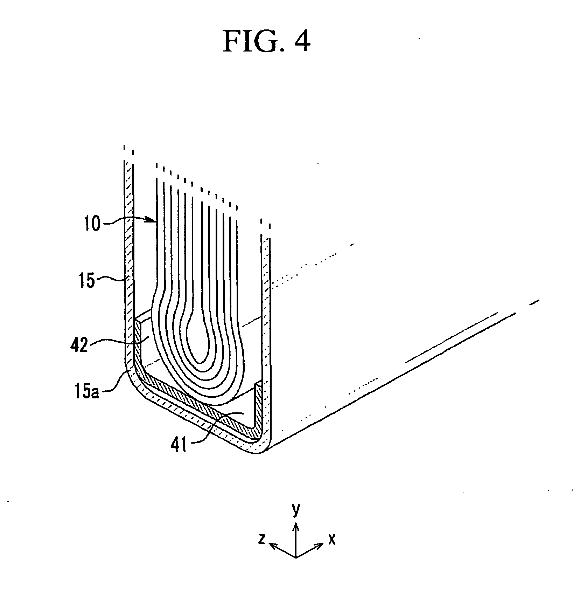

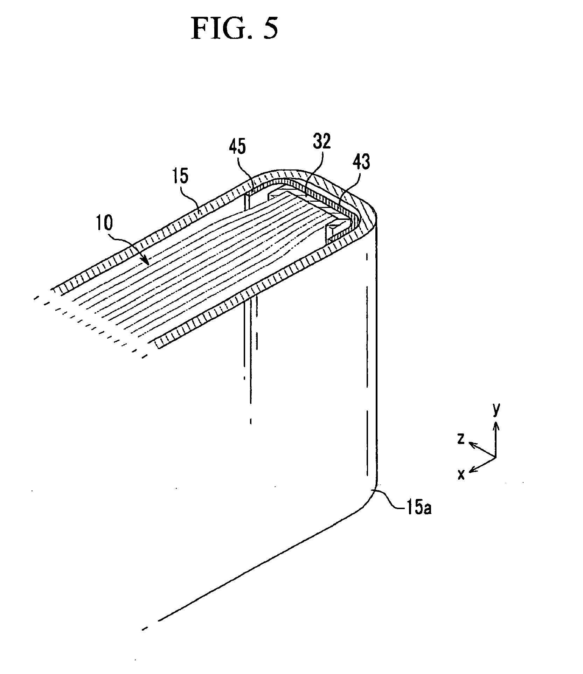

FIG. 4 is a partial cut-away perspective view of a rechargeable battery according to a first exemplary embodiment of the present invention taken in the vertical direction, and FIG. 5 is a partial cut-away perspective view of a rechargeable battery according to a first exemplary embodiment of the present invention taken in the horizontal direction.

The operation and effects of the buffer sheet 40 will be described in detail with reference to FIG. 4 and FIG. 5.

The sum in width of the bottom support plate 41 and the bottom springs 42 is larger than or the same as the inner width of the case 15. In case the sum in width of the bottom support plate 41 and the bottom springs 42 is larger than the inner width of the case 15, the bottom springs 42 are deformed while contacting the inner surface of the case 15 at both ends thereof so as to space the bottom support plate 41 from the case 15.

In case the sum in width of the bottom support plate 41 and the bottom springs 42 is the same as the inner width of the case 15, the bottom springs 42 are deformed while tightly adhered to the inner surface of the rounded case 15 at the rounded portions 15a thereof.

As the inner width of the case 15 is gradually reduced at the rounded portions 15a and the width of the buffer sheet 40 is larger than the inner width of the case 15 at the rounded portions 15a, the bottom springs 42 contact the inner surface of the case 15, and the bottom support plate 41 is spaced apart from the bottom of the case 15 with a distance. The case 15 is rounded in the shape of an arc with a radius of 2mm or more, and the bottom springs 42 are greater in curvature radius than the rounded portions 15a.

The bottom end of the electrode assembly 10 is tightly adhered to the top surface of the bottom support plate 41 so that the bottom support plate 41 can stably support the electrode assembly 10 up and downwards. Furthermore, even under the application of external impact or vibration, the bottom support plate 41 and the bottom springs 42 stably prevent the electrode assembly 10 from being shaken severely.

Referring to FIG. 5, the sum in width of the side support plates 43 and the side springs 45 is larger than or the same as the inner width of the case 15. In case the sum in width of the side support plates 43 and the side springs 45 is larger than the inner width of the case 15, the side springs 45 are deformed while contact the inner surface of the case 15 at both ends thereof so as to space the side support plates 43 from the case 15 with a distance. In case the sum in width of the side support plates 43 and the side springs 45 is the same as the inner width of the case 15, the side springs 45 are deformed while contacting the inner surface of the case 15 at the ends thereof.

The lateral end of the electrode assembly 10 is tightly adhered to the inner surface of the side support plates 43 so that the side support plates 43 can laterally support the electrode assembly 10 in a stable manner. Furthermore, even under the application of external impact or vibration, the side support plates 43 and the side springs 45 stably prevent the electrode assembly 10 from being shaken severely.

As described above, with the present exemplary embodiment, the impact absorbing and the vibration damping of the rechargeable battery 110 are improved by way of the buffer sheet 40. Accordingly, the contact resistance between the terminals 21 and 22 and the electrode assembly 10 is prevented from increasing due to the impact or vibration.

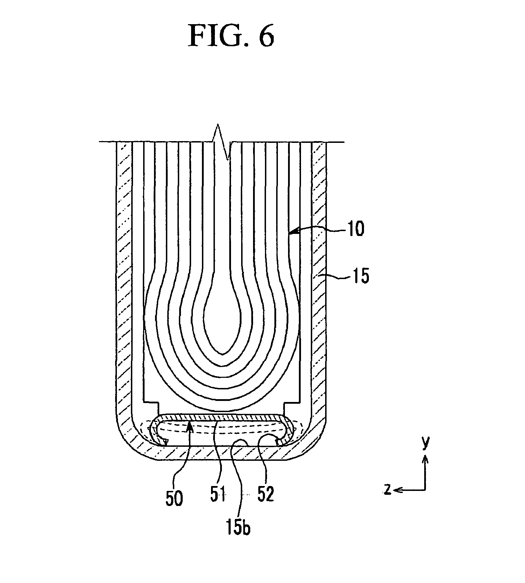

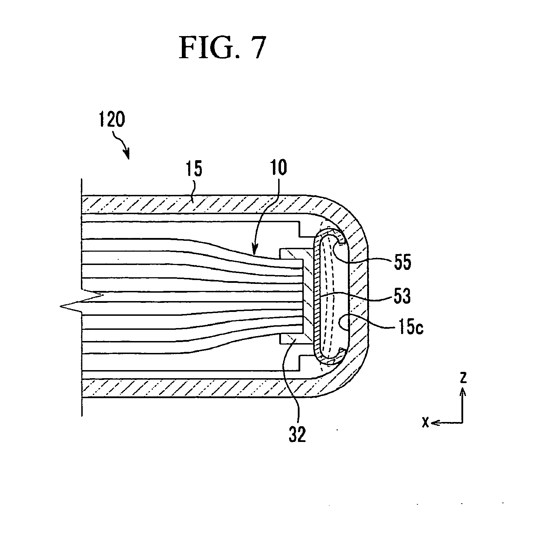

FIG. 6 is a vertical sectional view of a rechargeable battery according to a second exemplary embodiment of the present invention, and FIG. 7 is a horizontal sectional view of a rechargeable battery according to a second exemplary embodiment of the present invention.

Referring to FIG. 6 and FIG. 7, as the rechargeable battery 120 according to the present exemplary embodiment is the same in structure as the rechargeable battery related to the first exemplary embodiment except for a buffer sheet 50, repeated descriptions of the same structure will be omitted.

As like with the buffer sheet according to the first exemplary embodiment, the buffer sheet 50 according to the present exemplary embodiment includes a bottom support plate 51, bottom springs 52 formed at both lateral ends of the bottom support plate 51, side support plates 53 connected to the longitudinal ends of the bottom support plate 51, and side springs formed at both lateral ends of the side support plates 53.

The bottom support plate 51 is plate-shaped, and elongated along the bottom surface of the case 15. The bottom support plate 51 faces the inner bottom surface of the case 15, and contacts the bottom end of the overlying electrode assembly 10. The bottom springs 52 are plate-shaped, and elongated along both lateral ends of the bottom support plate 51. The bottom spring 52 is bent by 180 degrees toward the case 15 such that the top surface of the bottom spring 52 contacts the bottom of the case 15. The bottom spring 42 is bent roughly in the shape of an alphabetic letter "C," and the bent portion thereof may be elastically deformed.

The bent bottom springs 42 are enhanced in elasticity, and accordingly, under the application of external impact or vibration, the bottom support plate 51 may stably support the electrode assembly 10 up and downwards.

Meanwhile, as shown in FIG. 7, the side support plate 53 is plate-shaped and elongated along the lateral surface of the case 15. The side springs 55 are elongated along both lateral ends of the side support plate 53. The side support plate 53 faces the inner bottom surface of the case 15, and contacts the bottom end of the electrode assembly 10 placed inwardly. The side spring 55 is bent toward the case 15 by 180 degrees such that the surface of the side spring 55 contacts the bottom of the case 15. The side spring 55 is formed with a plate spring bent in the shape of an alphabetic letter "C," and the bent portion may be elastically deformed.

The bent side springs 55 are enhanced in elasticity, and accordingly, the side support plates 53 may laterally support the electrode assembly 10 in a stable manner.

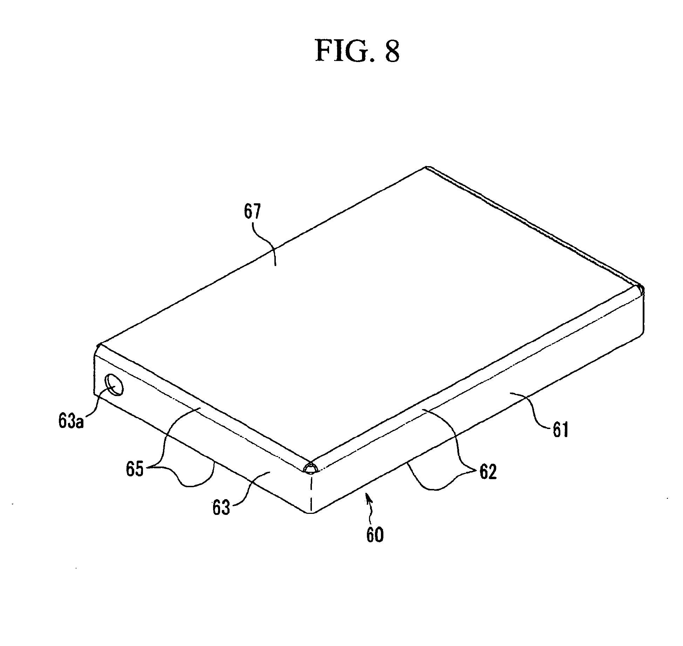

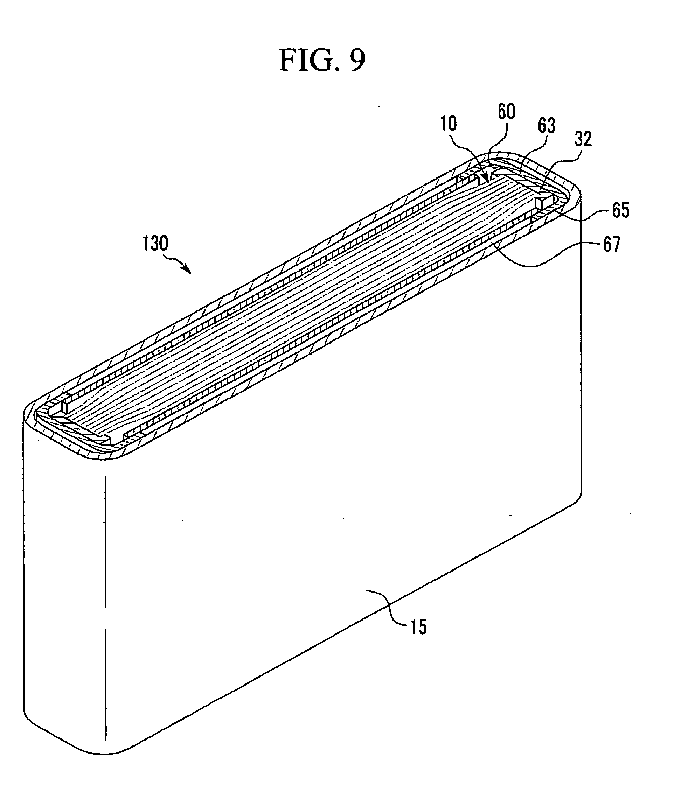

FIG. 8 is a perspective view of a buffer sheet for a rechargeable battery according to a third exemplary embodiment of the present invention, and FIG. 9 is a horizontal cut-away perspective view of a rechargeable battery according to a third exemplary embodiment of the present invention.

Referring to FIG. 8 and FIG. 9, the rechargeable battery according to the present exemplary embodiment is the same in structure as that related to the first exemplary embodiment except for a buffer sheet 60 and an insulating film 67.

The buffer sheet 60 according to the present exemplary embodiment includes a bottom support plate 61 facing the bottom of the case 15, bottom springs 62 formed at both lateral ends of the bottom support plate 61, side support plates 63 facing the lateral surfaces of the case 15, and side springs 65 formed at both lateral ends of the side support plates 63.

Furthermore, an insulating film 67 is fixed to the bottom springs 62 and the side springs 65 by way of thermal fusion. The insulating film 67 is attached to the two bottom springs 62 and the side springs 65, respectively. Accordingly, when the buffer sheet 60 and the insulating film 67 are combined with each other, the combinatory structure is formed roughly in the shape of a hexahedron with a top opening.

Meanwhile, a support plate hole 63a is formed at the side support plate 63 so as to discharge the gas passed the tab holes 31 a and 32a therethrough. Accordingly, the gas generated from the inside of the electrode assembly 10 easily flows to the top of the case 15 through the tab holes 31a and 32a and the support plate hole 63a.

The bottom and the side springs 61 and 65 are supported at their lateral ends by the rounded portion 15a of the case 15 so as to space the bottom support plate 61 and the side support plates 63 from the case 15 with a distance. Accordingly, the bottom and the side support plates 61 and 63 are spaced apart from the inner surface of the case 15 so as to support the electrode assembly 10, and the buffer sheet 60 absorbs external impact or damps vibration.

Meanwhile, the insulating film 67 prevents the electrode assembly 10 and the case 15 from being short-circuited with each other. When the insulating film 67 is fused to the buffer sheet 60, the impact and vibrations are absorbed or damped, and the electrode assembly 10 and the case 15 are stably prevented from being short-circuited with each other.

## Claims

1. A rechargeable battery (110) comprising:
an electrode assembly (10) having a first electrode (11) and second electrode (12), and a separator (13) interposed between the first and second electrode (11, 12), and
a case (15) for mounting the electrode assembly (10) therein,
a buffer sheet (40, 50, 60), provided between the electrode assembly (10) and the case (15), spacing apart the electrode assembly (10) from the case (15) and contacting the electrode assembly (10) and the case (15), the buffer sheet (40, 50, 60) comprising a bottom support plate (41, 51, 61) and first and second side support plates (43, 53, 63),
**characterized in that**
the buffer sheet (40, 50, 60) further comprises at least one of:
elastically deformable bottom springs (42, 52, 62) extending from lateral side surfaces of the bottom support plate (41, 61);
elastically deformable side springs (45, 55, 65) extending from lateral side surfaces of the side support plates (43, 53, 63).

2. Rechargeable battery (110) of claim 1, wherein the buffer sheet (40, 50, 60):
is elastically deformable; and/or
comprises plate-shaped portions; and/or
is u-shaped or has the shape of a hexahedron with a top opening; and/or
comprises a polymer material; and/or
comprises polymer film coated on a metal surface.

3. Rechargeable battery (110) of one of the previous claims, wherein the buffer sheet (40, 50, 60) is installed between the electrode assembly (10) and the bottom and side surfaces (15b, 15c) of the case (15).

4. Rechargeable battery (110) of one of the previous claims, wherein the length of the buffer sheet (40, 50, 60) is equal or larger than the inner length of the battery and/or the width of the buffer sheet (40, 50, 60) is equal or larger than the inner width of the battery.

5. Rechargeable battery (110) of claim 1, wherein the side support plates (43, 53, 63) extend from lateral ends of the bottom support plate (41, 51, 61).

6. Rechargeable battery (110) of claim 1, wherein the sum in width of the bottom support plate (41, 51, 61) and the bottom springs (42, 52, 62) is larger than or the same as the inner width of the case (15) and/or the sum in width of the side support plates (43, 53, 63) and the side springs (45, 55, 65) is larger than or the same as the inner width of the case (15).

7. Rechargeable battery (110) of claim 1 or 6, wherein at least one of the bottom springs (42, 52, 62) and the side springs (45, 55, 65) are not provided in the regions where the bottom support plate (41, 51, 61) connects the side support plates (43, 53, 63).

8. Rechargeable battery (110) of one of claims 1 or 6 to 7, wherein the bottom springs (42, 62) and/or side springs (45, 65) are plate springs.

9. Rechargeable battery (110) of one of claims 1 or 6 to 8, wherein:
the bottom support plate (41, 51, 61) faces the inner bottom surface of the case (15) and is provided spaced apart from the bottom surface of the case (15),
and/or
the first and second side support plates (43, 53, 63) face the respective inner side surfaces of the case (15) and are provided spaced apart from the respective inner side surfaces of the case (15), and/or
at least one of the bottom springs (41, 51, 61) and side springs (45, 55, 65) contact the inner surface of the case (15).

10. Rechargeable battery (110) of one of claims 1 or 6 to 9, wherein the bottom springs (52) and/or the side springs (55) are bent away from the electrode assembly (10) .

11. Rechargeable battery (110) of one of claims 1 or 6 to 10, wherein on at least a first lateral side of the bottom support plate (61) an insulating film (67) is attached between the bottom spring (62) and the first and second side springs (65).

12. Rechargeable battery (110) of claim 11, wherein a support plate hole (63a) is provided within the side support plate (63).

13. Rechargeable battery (110) of one of the previous claims, wherein the case (15) comprises rounded or curved edges (15a) formed at:
the connection between the bottom of the case (15) and side surfaces of the case (15); and/or
the connection between the bottom of the case (15) and front and back surfaces of the case (15); and/or
the connection between side surfaces of the case (15) and front and back surfaces of the case (15).

## Patentansprüche

1. Wiederaufladbare Batterie (110), umfassend:
eine Elektrodenanordnung (10) mit einer ersten Elektrode (11) und zweiten Elektrode (12) sowie einem zwischen der ersten und der zweiten Elektrode (11, 12) angeordneten Separator (13), und
ein Gehäuse (15) zum Aufnehmen der Elektrodenanordnung (10),
eine zwischen der Elektrodenanordnung (10) und dem Gehäuse (15) vorgesehene Pufferfolie (40, 50, 60), welche die Elektrodenanordnung (10) vom Gehäuse (15) beabstandet und mit der Elektrodenanordnung (10) und dem Gehäuse (15) in Kontakt steht, wobei die Pufferfolie (40, 50, 60) eine Bodenträgerplatte (41, 51, 61) sowie erste und zweite Seitenträgerplatten (43, 53, 63) umfasst,
**dadurch gekennzeichnet, dass**
die Pufferfolie (40, 50, 60) ferner mindestens eines aus folgendem umfasst:
elastisch verformbare Bodenfedern (42, 52, 62), die sich von lateralen Seitenflächen der Bodenträgerplatte (41, 61) erstrecken;
elastisch verformbare Seitenfedern (45, 55, 65), die sich von lateralen Seitenflächen der Seitenträgerplatten (43, 53, 63) erstrecken.

2. Wiederaufladbare Batterie (110) nach Anspruch 1, wobei die Pufferfolie (40, 50, 60):
elastisch verformbar ist; und/oder
plattenförmige Abschnitte umfasst; und/oder
U-förmig ist oder die Form eines Hexaeders mit einer oben liegenden Öffnung aufweist; und/oder
ein Polymermaterial umfasst; und/oder
eine Polymerschicht umfasst, die auf eine Metallfläche aufgetragen ist.

3. Wiederaufladbare Batterie (110) nach einem der vorstehenden Ansprüche, wobei die Pufferfolie (40, 50, 60) zwischen der Elektrodenanordnung (10) und der Boden- bzw. den Seitenflächen (15b, 15c) des Gehäuses (15) angebracht ist.

4. Wiederaufladbare Batterie (110) nach einem der vorstehenden Ansprüche, wobei die Länge der Pufferfolie (40, 50, 60) gleich der oder größer als die Innenlänge der Batterie ist und/oder die Breite der Pufferfolie (40, 50, 60) gleich der oder größer als die Innenbreite der Batterie ist.

5. Wiederaufladbare Batterie (110) nach Anspruch 1, wobei sich die Seitenträgerplatten (43, 53, 63) von lateralen Enden der Bodenträgerplatte (41, 51, 61) erstrecken.

6. Wiederaufladbare Batterie (110) nach Anspruch 1, wobei die Summe der Breite der Bodenträgerplatte (41, 51, 61) und der Bodenfedern (42, 52, 62) größer ist als oder dieselbe ist wie die Innenbreite des Gehäuses (15) und/oder die Summe der Breite der Seitenträgerplatten (43, 53, 63) und der Seitenfedern (45, 55, 65) größer ist als oder dieselbe ist wie die Innenbreite des Gehäuses (15).

7. Wiederaufladbare Batterie (110) nach Anspruch 1 oder 6, wobei mindestens eine der Bodenfedern (42, 52, 62) und der Seitenfedern (45, 55, 65) nicht in den Bereichen vorgesehen sind, wo die Bodenträgerplatte (41, 51, 61) mit den Seitenträgerplatten (43, 53, 63) verbunden ist.

8. Wiederaufladbare Batterie (110) nach einem der Ansprüche 1 oder 6 bis 7, wobei die Bodenfedern (42, 62) und/oder Seitenfedern (45, 65) Blattfedern sind.

9. Wiederaufladbare Batterie (110) nach einem der Ansprüche 1 oder 6 bis 8, wobei:
die Bodenträgerplatte (41, 51, 61) der inneren Bodenfläche des Gehäuses (15) zugewandt ist und beabstandet von der Bodenfläche des Gehäuses (15) vorgesehen ist, und/oder
die ersten und zweiten Seitenträgerplatten (43, 53, 63) den jeweiligen Innenseitenflächen des Gehäuses (15) zugewandt sind und von den jeweiligen Innenseitenflächen des Gehäuses (15) beabstandet vorgesehen sind, und/oder mindestens eine der Bodenfedern (41, 51, 61) und Seitenfedern (45, 55, 65) mit der Innenfläche des Gehäuses (15) in Kontakt stehen.

10. Wiederaufladbare Batterie (110) nach einem der Ansprüche 1 oder 6 bis 9, wobei die Bodenfedern (52) und/oder die Seitenfedern (55) von der Elektrodenanordnung (10) weggebogen sind.

11. Wiederaufladbare Batterie (110) nach einem der Ansprüche 1 oder 6 bis 10, wobei an mindestens einer ersten lateralen Seite der Bodenträgerplatte (61) eine Isolierschicht (67) zwischen der Bodenfeder (62) und den ersten und zweiten Seitenfedern (65) befestigt ist.

12. Wiederaufladbare Batterie (110) nach Anspruch 11, wobei in der Seitenträgerplatte (63) ein Trägerplattenloch (63a) vorgesehen ist.

13. Wiederaufladbare Batterie (110) nach einem der vorstehenden Ansprüche, wobei das Gehäuse (15) abgerundete oder gekrümmte Kanten (15a) umfasst, die ausgebildet sind an:
der Verbindung zwischen dem Boden des Gehäuses (15) und Seitenflächen des Gehäuses (15); und/oder
der Verbindung zwischen dem Boden des Gehäuses (15) und Vorder- und Rückflächen des Gehäuses (15); und/oder
der Verbindung zwischen Seitenflächen des Gehäuses (15) und Vorder- und Rückflächen des Gehäuses (15).

## Revendications

1. Batterie rechargeable (110) comprenant :
un assemblage d'électrodes (10) comportant une première électrode (11) et une seconde électrode (12), et un séparateur (13) interposé entre les première et seconde électrodes (11, 12), et
un boîtier (15) pour monter l'assemblage d'électrodes (10) à l'intérieur de celui-ci,
une feuille tampon (40, 50, 60), fournie entre l'assemblage d'électrodes (10) et le boîtier (15), espaçant l'assemblage d'électrodes (10) du boîtier (15) et mettant en contact l'assemblage d'électrodes (10) et le boîtier (15), la feuille tampon (40, 50, 60) comprenant une plaque de support inférieure (41, 51, 61) et des première et seconde plaques de support latérales (43, 53, 63),
**caractérisée en ce que**
la feuille tampon (40, 50, 60) comprend en outre au moins une des entités suivantes :
des ressorts inférieurs élastiquement déformables (42, 52, 62) s'étendant à partir des surfaces des côtés latéraux de la plaque de support inférieure (41, 61) ;
des ressorts latéraux élastiquement déformables (45, 55, 65) s'étendant à partir des surfaces des côtés latéraux des plaques de support latérales (43, 53, 63).

2. Batterie rechargeable (110) suivant la revendication 1, dans laquelle la feuille tampon (40, 50, 60) :
est élastiquement déformable ; et/ou
comprend des portions en forme de plaque ; et/ou
est en forme de u ou bien a la forme d'un hexaèdre avec un orifice supérieur ;
et/ou
comprend une matière polymère ; et/ou
comprend un film polymère appliqué sous forme de revêtement sur une surface métallique.

3. Batterie rechargeable (110) suivant l'une des revendications précédentes, dans laquelle la feuille tampon (40, 50, 60) est installée entre l'assemblage d'électrodes (10) et les surfaces inférieure et latérale (15b, 15c) du boîtier (25).

4. Batterie rechargeable (110) suivant l'une des revendications précédentes, dans laquelle la longueur de la feuille tampon (40, 50, 60) est égale ou supérieure à la longueur intérieure de la batterie et/ou la largeur de la feuille tampon (40, 50, 60) est égale ou supérieure à la largeur intérieure de la batterie.

5. Batterie rechargeable (110) suivant la revendication 1, dans laquelle les plaques de support latérales (43, 53, 63) s'étendent à partir d'extrémités latérales de la plaque de support inférieure (41, 51, 61).

6. Batterie rechargeable (110) suivant la revendication 1, dans laquelle la somme des largeurs de la plaque de support inférieure (41, 51, 61) et des ressorts inférieurs (42, 52, 62) est supérieure ou égale à la largeur intérieure du boîtier (15) et/ou la somme des largeurs des plaques de support latérales (43, 53, 63) et des ressorts latéraux (45, 55, 65) est supérieure ou égale à la largeur intérieure du boîtier (15).

7. Batterie rechargeable (110) suivant la revendication 1 ou 6, dans laquelle au moins l'un des ressorts inférieurs (42, 52, 62) et des ressorts latéraux (45, 55, 65) n'est pas placé dans les régions où la plaque de support inférieure (41, 51, 61) connecte les plaques de support latérales (43, 53, 63).

8. Batterie rechargeable (110) suivant l'une des revendications 1 ou 6 et 7, dans laquelle les ressorts inférieurs (42, 62) et/ou les ressorts latéraux (45, 65) sont des ressorts à lames.

9. Batterie rechargeable (110) suivant l'une des revendications 1 ou 6 à 8, dans laquelle :
la plaque de support inférieure (41, 51, 61) fait face à la surface inférieure intérieure du boîtier (15) et est placée à distance de la surface inférieure du boîtier (15), et /ou
les première et seconde plaques de support latérales (43, 53, 63) font face aux surfaces latérales intérieures respectives du boîtier (15) et sont placées à distance des surfaces latérales inférieures respectives du boîtier (15), et/ou
au moins des ressorts inférieurs (41, 51, 61) et des ressorts latéraux (45, 55, 65) entre en contact avec la surface intérieure du boîtier (15).

10. Batterie rechargeable (110) suivant une des revendications 1 ou 6 à 9, dans laquelle les ressorts inférieurs (52) et/ou les ressorts latéraux (55) sont fléchis à distance de l'assemblage d'électrodes (10).

11. Batterie rechargeable (110) suivant l'une des revendications 1 ou 6 à 10, dans laquelle, sur au moins une première face latérale de la plaque latérale inférieure (61), un film isolant (67) est fixé entre le ressort inférieur (62) et les premier et second ressorts latéraux (65).

12. Batterie rechargeable (110) suivant la revendication 11, dans laquelle un trou de plaque de support (63a) est aménagé à l'intérieur de la plaque de support latérale (63).

13. Batterie rechargeable (110) suivant l'une des revendications précédentes, dans laquelle le boîtier (15) comprend des bords arrondis ou incurvés (15a) formés à :
la connexion entre le fond du boîtier (15) et les surfaces latérales du boîtier (15); et/ou
la connexion entre le fond du boîtier (15) et les surfaces antérieure et postérieure du boîtier (15) ; et/ou
la connexion entre les surfaces latérales du boîtier (15) et les surfaces antérieure et postérieure du boîtier (15).
